# EUROPEAN PATENT APPLICATION

(11) **EP 1 727 098 A1**
(43) Date of publication of application: **29.11.2006**
(21) Application number: 06011000.4
(22) Date of filing: 29.05.2006
(51) Int. Cl.: G07F 7/10, G07F 19/00

(54) **Automated teller machine and cash transaction system**

(30) Priority: 27.05.2005 JP 2005155354
(71) Applicant: Hitachi-Omron Terminal Solutions, Corp., Bldg. No. 3, 1-6-3 Ohsaki Shinagawa-ku Tokyo 141-0032 (JP)
(72) Inventor: Nagayoshi, Hiroto, Tokyo 100-8220 (JP); Tanabe, Takashi, Tokyo 100-8220 (JP); Hiramatsu, Yoshitaka, Tokyo 100-8220 (JP); Sako, Hiroshi, Tokyo 100-8220 (JP)
(74) Representative: Beetz & Partner

(57) **Abstract**

A cash transaction system in which conditions for a transaction in cash can be set at an ATM by a user is disclosed. The cash transaction system is based upon a cash transaction system for making a transaction in cash using a card at an automated teller machine (100, 101) connected to a host computer (102), and is characterized in that the host computer (102) is provided with a memory(503) that manages an account of the user and a processor (504) that updates the balance of the account, and the automated teller machine (100, 101) is provided with a card information handling unit (304) that communicates information with the card, a display and input device (204) which displays a guidance screen for the user and on which the user inputs data, a cash handling unit (300) for withdrawing or depositing cash and a processor (307) that executes control and processing related to the transaction. Conditions for utilizing the automated teller machine (100, 101) can be set for every user by the operation of the user via the display and input device (204) and information of the set conditions of utilization is stored in the memory (503) of the host computer (102) with the information related to the account of the user or is stored in a memory device (405) provided to the card brought by the user.

## Description

### Background of the Invention

### Field of the Invention

The present invention relates to an automated teller machine and a cash transaction system, particularly relates to a cash transaction system in environment that the authentication of a user himself/herself who utilizes an automated teller machine is different and the handling of transaction conditions in the automated teller machine that authenticates the user utilizing biometric data of the user.

### Description of the Related Art

Recently, unfair transactions by the forgery of a magnetic card used for an automated teller machine such as an automatic teller's machine (ATM) and a cash dispenser (CD) of a financial institution and an illegal use of a personal identification number frequently occur. For measures for them, the utilization of an IC card which is a securer medium is started and the execution of biometrics authentication of a user himself/herself in a transaction in cash at an ATM is started.

For example, in JP-A No. 67523/2001 (Patent Reference), each fingerprint information of a user himself/herself and a proxy is registered in an IC card, and the user himself/herself and the proxy are authenticated by collating fingerprint information read by a scanner in a transaction at an ATM with the fingerprint information registered in the IC card beforehand.

### Summary of the Invention

However, to equip currently operated all teller machines such as an ATM and a CD with a biometrics authentication function, the cost and long time are required. As an account requiring biometrics authentication cannot be utilized at a teller machine not provided with biometrics authentication, a problem that handiness is deteriorated also occurs. A similar problem also occurs in an environment in which various types of biometrics authentication functions are used in a mixed state. For example, if vein authentication is adopted at A bank and retina authentication is adopted at B bank, a user X having an account at A bank requiring vein authentication cannot withdraw cash from his/her own account in A bank utilizing a teller machine in B bank because the user brings an IC card where his/her vein information is registered with him/her.

For a measure to solve these problems, it is proposed to utilize a card having both functions of a conventional type magnetic card and an IC card. That is, both a teller machine provided with biometrics authentication and a conventional type teller machine not provided with biometrics authentication can be utilized with one card by making authentication using the function of the IC card in which biometric data is registered when the teller machine provided with biometrics authentication is utilized and in the meantime, by making person authentication using the function of the magnetic card and a personal identification number when the conventional type teller machine not provided with biometrics authentication is utilized.

According to the above-mentioned technique, both machines can be utilized with one card, however, a bank account requiring biometrics authentication and a bank account not requiring biometrics authentication are separate. Therefore, to withdraw cash at an ATM not provided with biometrics authentication, troublesome work that a deposit is transferred to the latter account beforehand is required. As for a bank account not requiring biometrics authentication, a magnetic card is used as before and as to the illegal use of the card and the management of the account, a problem is still left unsolved.

The object of the invention is to provide an automated teller machine and a cash transaction system where a user can set conditions of a transaction in cash.

Another object of the invention is to provide an automated teller machine and a cash transaction system in which the same user can utilize a plurality of automated teller machines different in an authentication condition of the user.

The cash transaction system according to the invention is based upon a cash transaction system in which a transaction in cash can be made using a card at the automated teller machine connected to a host computer, and is characterized in that the host computer is provided with a memory for managing an account of a user and a processor that updates the balance of the account, the automated teller machines is provided with a card information handling unit that communicates information with a card, a display and input device which displays a guidance screen for the user and on which the user inputs data, a cash handling unit for withdrawing or depositing cash and/or a processor that executes control and processing related to a transaction, further, a predetermined machine connected to the host computer and having setting means for setting conditions for utilizing the automated teller machine for every user may be provided and information of conditions set by the setting means may be stored in the memory of the host computer with the information related to the account of the user and/or may be stored in a memory device provided to the card brought by the user (corresponding to Claim 1).

In a desirable example, the automated teller machine further includes a first automated teller machine provided with a sensor that acquires biometric data of a user and a second automated teller machine without a sensor, the predetermined machine is the first automated teller machine, the setting means is realized by the display and input device and the processor, and sets information of conditions input by the user via the display and input device for utilizing the second automated teller machine when the user is authenticated as a valid customer as a result of authentication based upon biometric data acquired from the sensor.

Besides, in a desirable example, the automated teller machine includes a first automated teller machine provided with a first type of sensor that acquires biometric data of a user and a second automated teller machine provided with a second type of sensor that acquires biometric data of the user, the predetermined machine is the first automated teller machine, the setting means is realized by the display and input device and the processor, and sets information of conditions input by the user via the display and input device for utilizing the second automated teller machine when it is approved that the user is a right customer as a result of authentication based upon biometric data acquired from the first type of sensor.

Besides, preferably, the card is an IC card provided with a memory device and a CPU, the card information handling unit is a card information input/output device that communicates information with the IC card, and the authentication based upon biometric data is executed by collating biometric data of a user registered in the memory device beforehand with biometric data acquired by the sensor by the CPU.

Besides, preferably, the card is an IC card provided with a memory device and a CPU, the card information handling unit is a card information input/output device that communicates information with the IC card, and the authentication based upon biometric data is executed by collating biometric data of a user registered in the memory device of the IC card or the memory of the host computer beforehand with biometric data acquired by the sensor by the processor of the host computer.

Besides, in one example, the memory or the memory device of the card stores at least one information, specified by a user, of an available period, a transacted sum, a frequency of transactions respectively related to the utilization of the second automated teller machine, an area of the second automated teller machine and information for identifying a financial institution that manages the second automated teller machine as the condition information.

Besides, preferably, when the second automated teller machine is utilized, the processor of the second automated teller machine acquires the condition information from the memory device or the memory and determines whether a user can utilize the second automated teller machine or not.

Besides, preferably, a first authentication process by the collation of biometric data of a user acquired in the first automated teller machine is executed in the IC card and a second authentication process by the collation of a personal identification number input by the user via the display and input device is executed by the processor of the host computer.

Besides, preferably, if it is determined that the second automated teller machine can be utilized, the second automated teller machine sends a personal identification number input via the display and input device to the host computer and the processor of the host computer authenticates a user by collating the received personal identification number with a personal identification number of the user registered in the memory beforehand.

The automated teller machine according to the invention is based upon an automated teller machine which is connected to a host computer provided with a memory for managing an account of a user and in which a transaction in cash is made using a card, and is characterized in that the automated teller machine is provided with a card information handling unit that communicates information with the card, a display and input device which displays a guidance screen for the user and on which the user inputs data, a cash handling unit for withdrawing or depositing cash, a processor that executes control and processing related to a transaction and/or a communication unit that communicates information related to a transaction with the host computer, conditions for utilizing the automated teller machine may be set for every user by the processing of the processor according to input by the user via the display and input device, and information of the set conditions may be sent to the memory of the host computer via the communication unit to store the information with the information related to the account of the user and/or is transferred to a memory device provided to the card via the card information handling unit to store in the memory (corresponding to Claim 10).

In a desirable example, the automated teller machine is further provided with a sensor that acquires biometric data of a user and information of conditions for utilizing another automated teller machine may be set according to input by the user via the display and input device if it is approved that the user is a right customer as a result of authentication based upon biometric data acquired from the sensor.

Besides, preferably, the card is an IC card provided with a memory device and a CPU, the card information handling unit is a card information input/output device that communicates information with the IC card, and the authentication based upon biometric data is executed by collating biometric data of a user registered in the memory device of the IC card beforehand with biometric data acquired by the sensor by the CPU.

Besides, preferably, at least one of an available period, a transacted sum, a frequency of transactions respectively related to the utilization of a second automated teller machine, an area of the second automated teller machine and information for identifying a financial institution that manages the second automated teller machine is specified and input as condition information according to input by a user via the display and input device.

The cash transaction system according to the invention may be based upon a cash transaction system including a plurality of automated teller machines connected to a host computer for enabling a transaction in cash at a plurality of automated teller machines using a card proper to a user and brought by the user, and is characterized in that the host computer is provided with a memory that manages an account of the user, a first automated teller machine permits the user a transaction when it is verified that the user is a right customer by first authentication and second authentication for the user, a second automated teller machine permits the user a transaction when it is verified that the user is a right customer by the second authentication for the user and a process for the first authentication or the second authentication is executed by the host computer or a processor of the first or second automated teller machine or a CPU provided to the card brought by the user (corresponding to Claim 14).

In a desirable example, the first authentication is authentication by collating biometric data of a user and the second authentication is authentication by collating biometric data of the user or by collating a personal identification number input by the user via an input device.

Besides, preferably, the first automated teller machine is provided with setting means for setting conditions for a user to utilize the second automated teller machine, and information of the conditions set by the setting means is stored in the memory of the host computer with the information related to an account of the user and/or is stored in a memory device provided to the card brought by the user.

A transaction method in the cash transaction system according to the invention is based upon a transaction method in a cash transaction system that makes a transaction in cash using a card with an automated teller machine connected to a host computer, and is characterized in that the transaction method includes a step of reading information of the card used by a user for the transaction, a step of displaying a transaction guidance screen on a display and input device to enable the input the transaction on the screen by the user, a step of withdrawing or depositing cash via a cash handling unit, a step of storing and managing account information of the user in a memory provided to the host computer, a step of inputting conditions for utilizing the automated teller machine via the display and input device and setting the conditions for every user and a step of storing information of the set conditions of utilization in the memory of the host computer with the information related to an account of the user or storing in a memory device provided to the card brought by the user (corresponding to an eighteenth aspect).

In a desirable example, the transaction method according to the invention includes a step of acquiring biometric data of a user by a sensor provided to the automated teller machine and a step of authenticating the user using the biometric data acquired from the sensor, and if it is approved that the user is a right customer as a result of the authentication, information of the conditions input by the user via the display and input device for utilizing the automated teller machine is set.

Besides, preferably, the authentication of a user using the biometric data is a transaction method executed by collating biometric data of a user registered in a memory device of an IC card used for a transaction beforehand with biometric data acquired by the sensor by a CPU of the IC card.

Besides, preferably, the transaction method according to the invention is a transaction method of specifying at least one of a period in which the automated teller machine can be utilized, a transacted sum, a frequency of transactions, an area of the automated teller machine and information for identifying a financial institution that manages the automated teller machine as conditions according to input via the display and input device.

Besides, preferably, the transaction method according to the invention is a transaction method provided with a step of acquiring condition information from the memory device or the memory when the automated teller machine for which conditions are set is utilized and determining whether the user can utilize the automated teller machine or not.

Besides, preferably, the transaction method according to the invention is a transaction method further provided with a step of authenticating a user by collating a personal identification number input by the user via the display and input device with a personal identification number of the user stored in the memory of the host computer beforehand.

Besides, the invention may be grasped as a program processed on a computer for executing a transaction method in a cash transaction system for making a transaction in cash using a card in an automated teller machine connected to a host computer. That is, this program may be a program for executing a step of reading information of the card used by a user for a transaction, a step of displaying a transaction guidance screen on a display and input device and requesting the user to input a transaction, a step of withdrawing or depositing cash from a cash handling unit, a step of storing and managing account information of the user in a memory provided to the host computer, a step of inputting conditions for utilizing the automated teller machine via the display and input device and setting conditions for every user and a step of storing information of the set conditions in the memory of the host computer with the information related to an account of the user or storing the information in a memory device provided to the card brought by the user.

According to the invention, a user can set conditions of a transaction in cash in an automated teller machine. Besides, according to the invention, environment of a transaction in cash in which high security is secured for enabling utilizing a plurality of automated teller machines where authentication conditions of the same user are different, for example, both a teller machine provided with biometrics authentication and a teller machine without biometrics authentication can be acquired.

### Brief Description of the Drawings

Fig. 1 shows a schematic configuration of a cash transaction system equivalent to one embodiment.
Fig. 2 shows the appearance of a teller machine 100 with biometrics authentication.
Fig. 3 shows an internal configuration of the teller machine 100 with biometrics authentication.
Fig. 4 shows the configuration of an IC card.
Fig. 5 shows the internal configuration of a host computer 102.
Fig. 6 shows an example of a display guidance screen of a display and input device 204.
Fig. 7 shows an example of the display guidance screen of the display and input device 204.
Fig. 8 shows an example of the display guidance screen of the display and input device 204.
Fig. 9 shows operation of a teller machine 100 with biometrics authentication in a first embodiment.
Fig. 10 shows operation of a teller machine 101 without biometrics authentication in the first embodiment.
Fig. 11 shows a format of condition information of the teller machine without biometrics authentication.
Fig. 12 shows operation of a teller machine 100 with biometrics authentication in a second embodiment.
Fig. 13 shows operation of a teller machine 101 without biometrics authentication in the second embodiment.
Fig. 14 shows operation of a teller machine with biometrics authentication 100 in a third embodiment.
Fig. 15 shows operation of a teller machine 101 without biometrics authentication in the third embodiment.
Fig. 16 shows connection of teller machines in a fourth embodiment.
Fig. 17 shows the guidance screen displayed on the display and input device 204.
Fig. 18 shows the guidance screen displayed on the display and input device 204.
Fig. 19 shows an example of management information such as an installed location of the automated teller machine.

### Detailed Description of the Invention

Referring to the drawings, embodiments of the invention will be described below.

### First Embodiment

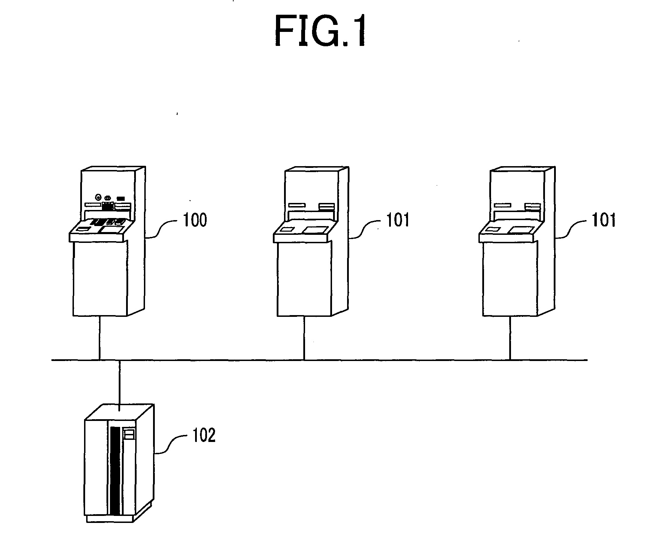

Fig. 1 shows the schematic configuration of a cash transaction system equivalent to a first embodiment.

A plurality of teller machines 100, 101 such as ATM are connected to a host computer 102 via a leased line or a network. A reference numeral 100 denotes a teller machine with biometrics authentication means (hereinafter called a teller machine with biometrics authentication) and 101 denotes a teller machine without biometrics authentication means (hereinafter called a teller machine without biometrics authentication). The teller machine 100 with biometrics authentication means a teller machine that executes a biometrics authentication process to authenticate a user in a transaction in cash. There are some ways of where a collating process for biometrics authentication is to be executed, however, the invention is not limited to them. In the meantime, the teller machine 101 without biometrics authentication does not execute a biometrics authentication process to authenticate a user and authenticates a user by collating an input personal identification number (hereinafter called PIN) for example as heretofore. The host computer 102 manages PIN of the user and manages account balance corresponding to an account number of the user.

Fig. 1 shows one teller machine 100 with biometrics authentication and two teller machines without biometrics authentication 101, however, the number of these machines is arbitrary.

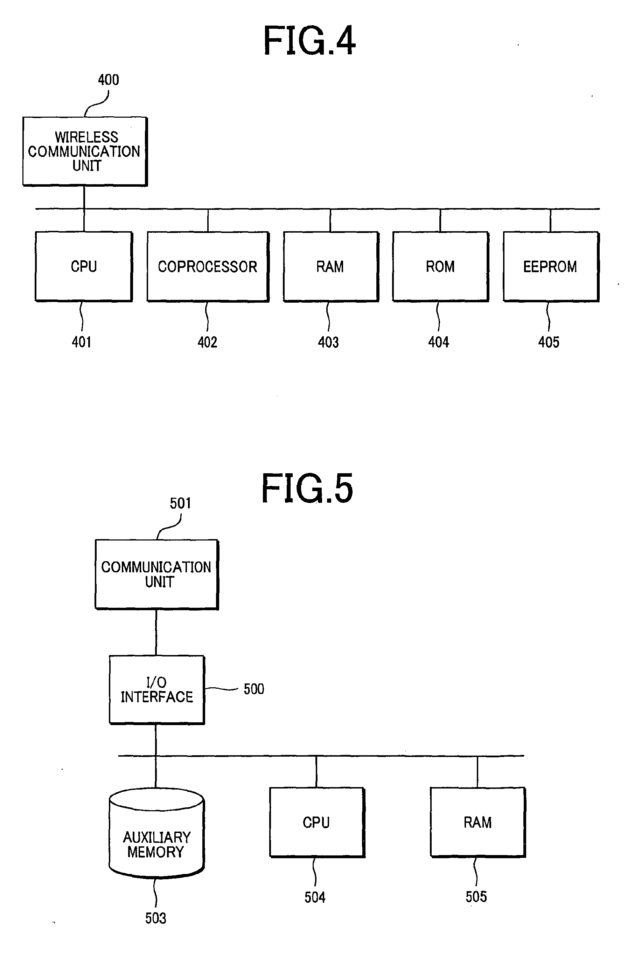

A cash card used in this embodiment is a card provided with functions of a magnetic stripe and an IC card in one card and a collating process to authenticate a user shall be executed by a CPU in the IC card. Referring to Fig. 4, the configuration of the card will be described later.

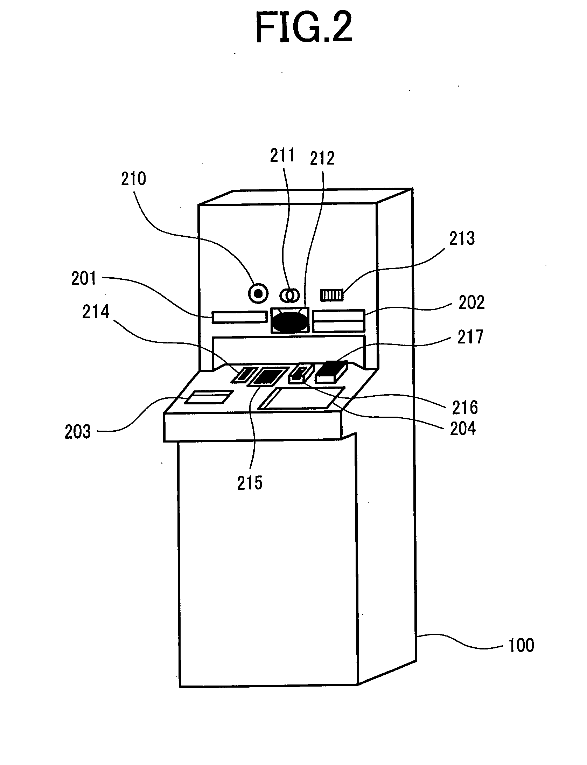

Fig. 2 shows the appearance of the teller machine 100 with biometrics authentication.

As shown in Fig. 2, a reference numeral 201 denotes a passbook slot for depositing and withdrawing a passbook, 202 denotes a card slot for depositing and withdrawing a cash card, 203 denotes a box for depositing and withdrawing cash, 204 denotes a display and input device, and for example, the display and input device is a touch panel type liquid crystal display provided with a liquid crystal display as a display and provided with a touch panel as an input device on the surface of the liquid crystal display. A reference numeral 210 denotes a camera that photographs a user's face, 211 denotes an iris sensor, 212 denotes a retina sensor, 213 denotes a microphone for acquiring a sound spectrogram, 214 denotes a fingerprint sensor, 215 denotes a palm print sensor; 216 denotes a finger vein sensor, and 217 denotes a palm vein sensor. These sensors and microphone 210 to 217 (hereinafter called sensors together) acquire biometric data from a biometric part of each object as an optical image or voice. The teller machine 100 with biometrics authentication has only to be provided with at least one of the sensors 210 to 217. A sensor for acquiring biometric data except the above-mentioned sensors may also be provided.

In the meantime, the teller machine 101 without biometrics authentication has configuration except the biometric sensors 210 to 217 shown in Fig. 2.

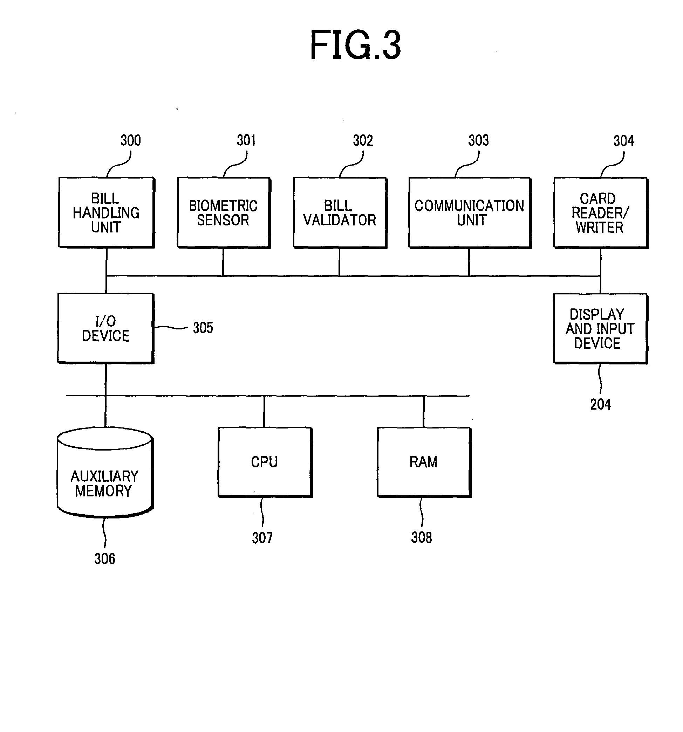

Fig. 3 is a block diagram showing the internal configuration of the teller machine 100 with biometrics authentication.

A reference numeral 300 denotes a bill handling mechanism that carries and houses a bill, 301 denotes a biometric sensor (at least one of the sensors 210 to 217), 302 denotes a bill validator that determines a type of a bill and whether a bill is genuine or counterfeit, 303 denotes a communication unit that sends/receives information to/from the host computer 102, 304 denotes a magnetic stripe reader that reads information recorded on a magnetic stripe of a card, and 305 denotes an IC card reader/writer (R/W) that reads/writes information of an IC card. If an IC card is a non-contact type, the IC card reader/writer 305 is a contact type connector and in the meantime, in the case of a non-contact type IC card, the IC card reader/writer is a send/receive antenna. In the following description, an IC card shall be a non-contact type card.

A reference numeral 204 denotes a display and input device, 306 denotes an auxiliary memory such as HDD, the auxiliary memory stores programs executed in the teller machine, and temporarily stores information transacted by a user as a log. A reference numeral 307 denotes a CPU that controls a component of the teller machine 100 and executes information processing for a transaction. A reference numeral 308 denotes RAM and RAM functions as a work area when the CPU 307 executes processing. A reference numeral 309 denotes an I/O interface that controls the input/output of a signal.

For the configuration of the teller machine 100 with biometrics authentication, the IC card reader/writer 305 has only to be provided to authenticate a user and the magnetic stripe reader 304 is not necessarily required. However, if failure occurs in the IC card reader/writer 305 and for a situation that information processed in an IC card cannot be satisfactorily acquired, the magnetic stripe reader 304 is provided and information stored on the magnetic stripe may also be effectively utilized.

It may be supposed that the teller machine 101 without biometrics authentication is configured except the biometric sensors 301 and the IC card reader/writer 305 of the teller machine shown in Fig. 3.

Fig. 4 is a block diagram showing the internal configuration of an IC card.

A reference numeral 400 denotes a wireless communication unit that communicates with the IC card reader/writer 305 of the teller machine, 401 denotes a CPU, and the CPU executes information processing, especially a process for collating biometric data to authenticate a user. A reference numeral 402 denotes a coprocessor for encrypting at high speed for example, 403 denotes a RAM that temporarily stores information, 404 denotes a ROM that stores information which is not reloadable such as a program, and 405 denotes an EEPROM used for storing data. The EEPROM 405 encrypts and stores personal identification number (PIN) and biometric data of a user respectively used for a transaction. PIN and biometric data stored in the EEPROM 405 are used after they are decoded by the coprocessor 402.

The CPU 401 collates biometric feature data input from the IC card reader/writer 305 via the wireless communication unit 400 with biometric feature data stored in the EEPROM 405 and determines whether they are the same biometric data or not. Both biometric feature data can be collated by supposing biometric data to be vectors showing feature parameters for example and comparing biometric feature data input using Euclidean space and others and biometric feature data stored in the EEPROM 405. If a calculated distance value is smaller than a predetermined threshold, the biometric feature data are judged to be information from the same human body and it is regarded as the success of authentication. If not, it is regarded as the failure of authentication.

It is desirable in view of security that the authentication of a user by PIN in addition to biometrics authentication is made. For the order of execution, authentication by PIN input from the display and input device 204 is made after the execution of biometrics authentication. Conversely, after authentication by PIN, biometrics authentication may also be made.

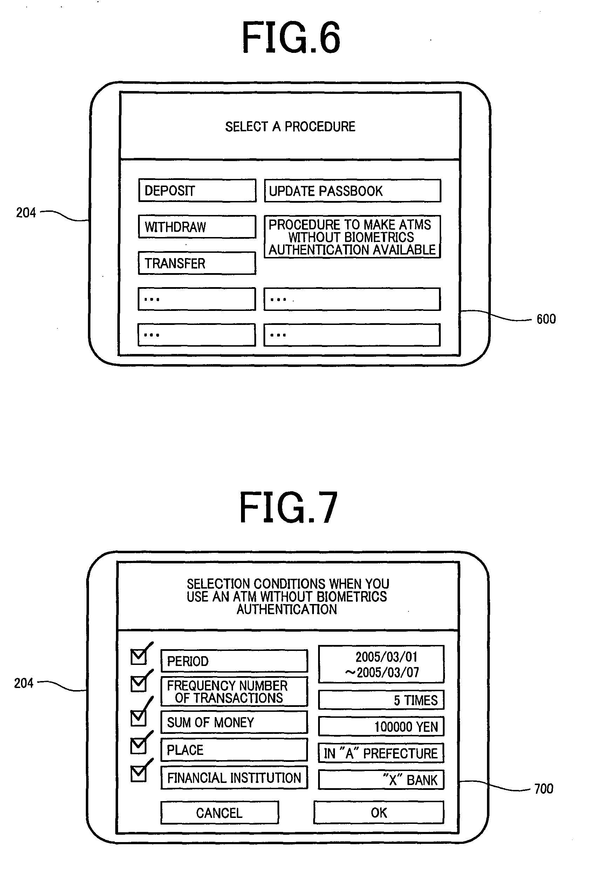

Fig. 5 is a block diagram showing the internal configuration of the host computer 102.

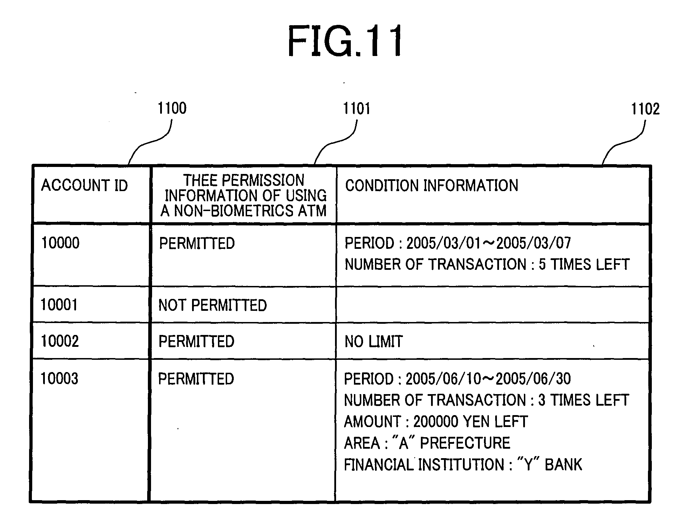

A reference numeral 500 denotes an I/O interface that controls the input/output of a signal, 501 denotes a communication unit that sends/receives information to/from the teller machines 100, 101, and 504 denotes a CPU that authenticates a user and executes information processing for updating account balance. A reference numeral 505 denotes a RAM and the RAM is used as a work area when the CPU 504 processes information. A reference numeral 503 is an auxiliary memory such as HDD and the auxiliary memory stores account valance and PIN every account number of a user. The auxiliary memory 503 stores information characteristic in this embodiment of the invention, that is, condition information when the teller machine without biometrics authentication is utilized. Referring to Fig 11, this will be described below.

Fig. 6 shows an example of a screen displayed on the display and input device 204 of the teller machine and shows an example of an initial screen of a transaction.

A screen 600 is displayed when a user inserts his/her cash card into the card slot 203, when the user touches his/her hand to the display and input device 204 or when the camera 210 senses that the user approaches the teller machine for example. Needless to say, while a user is awaited, the screen 600 may also be continuously displayed.

The user can select a desired transaction item out of a plurality of items displayed on the screen 600. For the transaction items to be selected, a procedure for utilizing a teller machine without biometrics authentication characteristic in this embodiment is included in addition to a deposit, withdrawal and a transfer. That is, the transaction screen 600 of the teller machine 100 with biometrics authentication is operated and a procedure for utilizing the teller machine 101 without biometrics authentication can be taken.

Next, transaction operation at the teller machine 100 with biometrics authentication will be described.

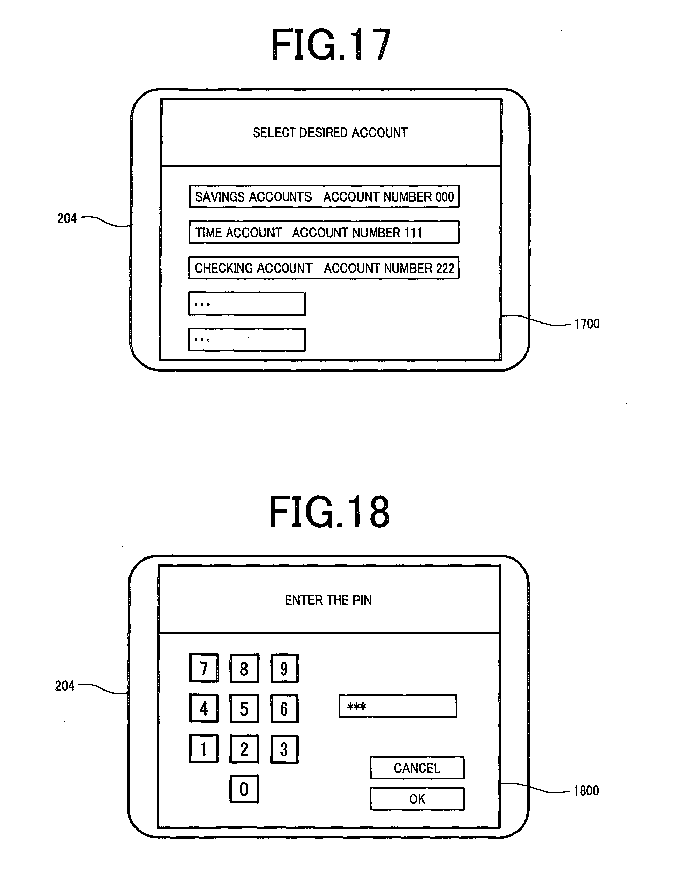

First, a user inserts his/her cash card into the card slot 202 of the teller machine 100 with biometrics authentication. In this case, if the cash card which can be utilized in a plurality of accounts is inserted, a screen 1700 shown in Fig. 17 for example is displayed on the display and input device 204 and the user can designate the desired account.

When the user selects "Procedure for utilizing teller machine without biometrics authentication" on the screen 600, the teller machine 100 with biometrics authentication accepts the input, and starts the procedure for utilizing the teller machine without biometrics authentication.

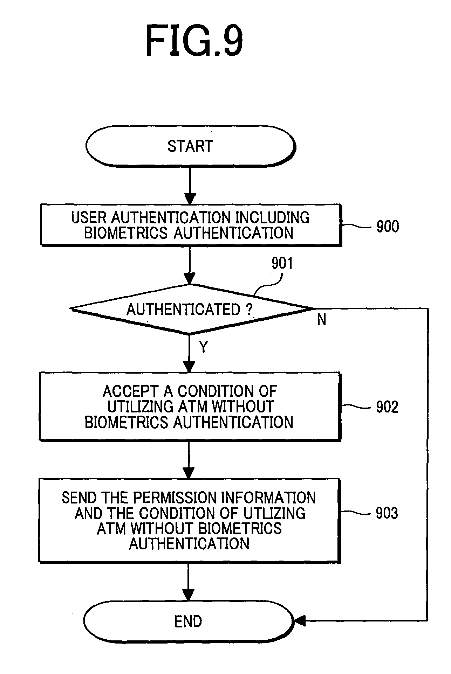

Referring to a flowchart shown in Fig. 9, a flow of the following process in the teller machine 100 with biometrics authentication will be described below. The contents of processing shown in flowcharts in Fig. 9 and the following drawings are executed according to programs executed by CPU in the teller machines 100, 101, the host computer 102 or an IC card.

As shown in Fig. 9, the teller machine 100 executes the authentication of a user including at least one biometrics authentication (900). A procedure for biometrics authentication is as follows for example. That is, the CPU 307 operates in the teller machine 100 and calculates feature data for biometrics authentication based upon biometric data acquired by any of the biometric sensors 210 to 217. For example, in the case of a fingerprint, the CPU calculates the branching of a line and a positional relation of an endpoint in the fingerprint. For a method of calculation, a known method is used. Afterward, the feature data for biometrics authentication is sent to the IC card via the IC card reader/writer 305.

In the IC card shown in Fig. 4, the CPU 401 compares the received biometric feature data and biometric feature data stored in the EEPROM 405 and determines that they are the same biometric data or not. As a result of collation, if it is determined that they are the same biometric data, a signal telling the success of authentication is returned to the teller machine 100 via the wireless communication unit 400. Similarly if authentication fails, a signal telling the failure of authentication is also returned (901).

In a desirable example, the authentication of a user by PIN is made in addition to biometrics authentication so as to enhance the security of a transaction. This example will be described below.

First, a guidance screen 1800 shown in Fig. 18 for requesting the user to input PIN on the display and input device 204 is displayed by the execution of the CPU 307 of the teller machine 100 with biometrics authentication and CPU accepts the input of PIN from the user. The CPU 307 sends acquired PIN and an account number previously read from a cash card to the host computer 102 via the communication unit 303. The host computer 102 reads PIN of the corresponding user stored in the auxiliary memory 503 by the execution of the CPU 504 and compares PIN sent from the teller machine 100 and PIN registered beforehand. As a result of comparison, if both are matched, it is judged to be the success of authentication and if not matched, it is judged to be the failure of authentication. The result of the determination of authentication is sent to the teller machine 100 via the communication unit 501. The teller machine 100 receives the result of authentication from the communication unit 303 and the CPU 307 grasps the result of authentication by the collation of PIN. Depending upon the result of authentication, the following process is different (901).

As clarified from the above description, if authentication fails as a result of biometrics authentication, the transaction is finished and the effect is displayed on the guidance screen. If authentication by PIN fails even if biometrics authentication succeeds, the transaction is similarly finished.

If biometrics authentication based upon a plurality of biometric data is made, second biometrics authentication is made only when first biometrics authentication succeeds. Afterward, a procedure for making third biometrics authentication only when the second biometrics authentication succeeds is taken. If authentication fails on the way, it is judged as the failure of authentication of the user at that time, the following authentication of the user is not made, and the authentication is similarly finished.

Next, a process when authentication succeeds as a result of the authentication of the user will be described.

If the authentication succeeds, input from the user on the display and input device 204 for a condition of utilizing a teller machine without biometrics authentication is accepted (902). When the condition of utilization is input, a guidance screen 700 shown in Fig. 7 is displayed on the display and input device 204.

The screen 700 is a screen for selecting the contents of five items of a period, a frequency of transactions, a sum, an area and a financial institution as the condition of utilizing the teller machine 101 without biometrics authentication. Each condition is ANDed, if the user completes without selecting any condition, it is considered that the user withdraws permission to utilize the teller machine without biometrics authentication. The permission to utilize can be also withdrawn by selecting "Cancel permission" button.

After the input of condition information on the screen 700 is accepted, the CPU 307 of the teller machine 100 with biometrics authentication sends utilization permission information meaning whether the utilization of a teller machine without biometrics authentication is permitted or not and condition information meaning conditions for utilizing the teller machine without biometrics authentication to the host computer 102 via the communication unit 303 (903).

The host computer 102 receives the utilization permission information and the condition information via the communication unit 501. The CPU 504 registers the received utilization permission information and condition information in the auxiliary memory 503. As shown in Fig. 11, utilization permission information 1101 and condition information 1102 are stored in the auxiliary memory 503 in a condition in which they are related to an account number 1100 of the user. The registration process for setting the utilization of the teller machine without biometrics authentication by the user is finished by the processing.

Referring to Fig. 11, the utilization permission information 1101 and the condition information 1102 will be described below.

The utilization permission information 1101 means information showing whether the utilization of a teller machine without biometrics authentication is permitted or not. The condition information 1102 means information for setting a condition when the teller machine without biometrics authentication is utilized and includes conditions of utilization such as a period, a frequency of transactions, a sum, an area and a financial institution. "A period" in the condition information 1102 means a condition for specifying a period in which the teller machine without biometrics authentication can be utilized.

"A frequency of transactions" means a maximum frequency in which the teller machine without biometrics authentication can be utilized in a specified period and every time it is utilized, the maximum frequency is updated and reduced. For a method of limiting by the frequency of transactions, there are (1) a method of limiting the total frequency of utilization of various transactions and (2) a method of limiting the frequency of transactions for every type of a transaction for example. (1) The transaction included in various transactions means a transaction related to withdrawal from an account such as withdrawal and transfer from an account to an account. When other transactions in which the risk of unfair utilization is low are set so that they are not included in a count of the frequency of transactions, handiness is enhanced. In the case of (2), a plurality of parts to input the frequency of transactions on the screen 700 are prepared and the setting of the user has only to be accepted. As setting is intricate in the latter method, the method (1) is desirable.

"A sum" in the conditions of utilization shows the upper limit of a sum when a teller machine without biometrics authentication is utilized and a transaction is made. For a type of a transaction to be an object, a transaction related to withdrawal from an account such as withdrawal and transfer from an account to an account is included. For a method of limiting the sum, (1) a method of limiting using a total sum withdrawn without biometrics authentication and (2) a method of limiting depending upon a withdrawn sum per once for example are conceivable. Description will be made based upon (1) below, however, even if (2) is used and even if both (1) and (2) are used, the similar operation is performed except the determination of a condition of the sum.

"A financial institution" in the conditions of utilization means a name of a utilizable financial institution and a code of a specified financial institution is registered. When a certain bank is specified, only teller machines without biometrics authentication managed by the bank can be utilized. "An area" in the conditions of utilization means an area where a teller machine without biometrics authentication can be utilized and when a name of a certain prefecture is specified, only teller machines without biometrics authentication existing in the prefecture can be utilized. Setting that only teller machines set except a convenience store can be utilized is also possible.

The user can input a request to utilize a teller machine 101 without biometrics authentication and details of conditions of utilization on the display and input device 204 of the teller machine 100. An example of conditions of utilization that only teller machines without biometrics authentication of an X bank in A prefecture can be utilized, a utilizable period is from March 1, 2005 till March 7, 2005 and further, a frequency in which a transaction is possible in the period is five times at a maximum is displayed on the screen 700.

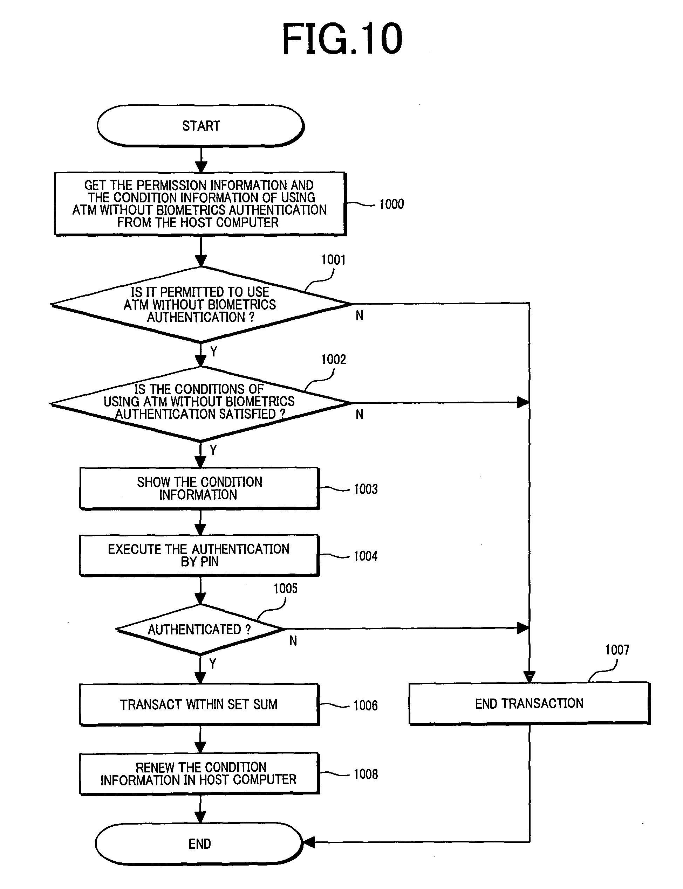

Referring to Fig. 10, operation will be described below in the case the user utilizes a teller machine 101 without biometrics authentication after conditions of utilizing teller machines without biometrics authentication are set as described above and are registered in the auxiliary memory 503 of the host computer 102.

A process for determining whether a teller machine without biometrics authentication can be utilized or not is executed in the teller machine 101 without biometrics authentication.

The user selects a type of a transaction (however, a transaction requiring personal authentication) using the screen 600 shown in Fig. 6 and inserts his/her cash card into the card slot 202. The used card has only to be at least provided with a function for specifying the user's account and for example, may also be a conventional type magnetic card or an IC card. If a transaction in a plurality of accounts is made possible by one cash card, the screen 1700 shown in Fig. 17 is displayed on the display and input device 204 at the teller machine 101 without biometrics authentication and the specification of the account to be an object is accepted (suppose that Fig. 3 shows the teller machine without biometrics authentication. Hereinafter it is similar). The CPU 307 sends an account number of the object of the transaction to the host computer 102 via the communication unit 303.

The host computer 102 receives the account number via the communication unit 501, the CPU 504 accesses to the auxiliary memory 503 and reads the utilization permission information 1101 and the condition information 1102 respectively corresponding to the account number, and the CPU sends them to the teller machine 101 without biometrics authentication via the communication unit 501.

In the teller machine 101 without biometrics authentication, the CPU 307 determines whether utilization is permitted based upon the received utilization permission information 1101 or not (1001) and if the utilization is not permitted, the transaction is finished (1007). In the meantime, if the utilization is permitted, the CPU 307 determines whether or not the teller machine without biometrics authentication can be utilized based upon the condition information 1102 (1002).

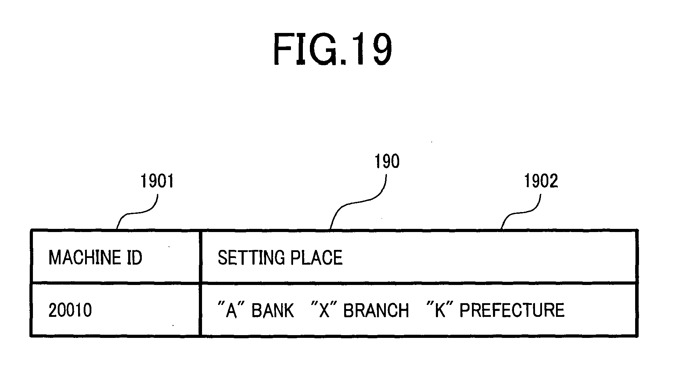

For example, an account number 10002 shown in Fig. 11 is an account requiring no biometrics authentication and conditions of utilization are not specified. In the case of this user, it is determined that a condition of utilization is met. As the frequency of transactions still remains as to an account number 10003 shown in Fig. 11, it is determined that a condition of utilization is met if only a teller machine of Y bank in A prefecture is utilized and a date of utilization is in a range from July 10, 2005 to July 30, 2005. At this stage, a condition of utilization related to the sum is not determined. An installed location and an owner bank of the teller machine 101 can be determined by registering management information such as an installed location 190 shown in Fig. 19 in the auxiliary memory 503 for each of the teller machines 101 without biometrics authentication beforehand and referring to it. That is, the management information 190 holds a machine number 1901 given every teller machine and installation information 1902 showing its installed location.

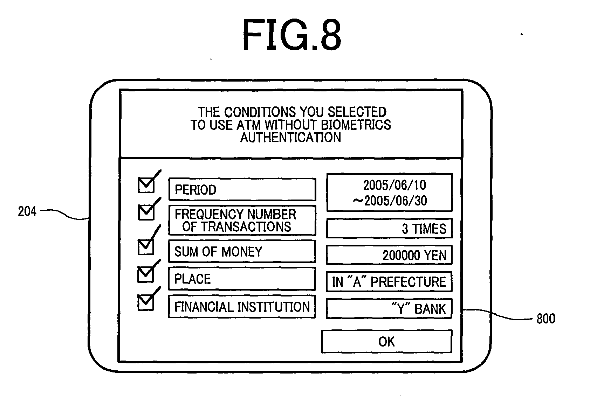

As a result of determination 1002 by the CPU 307, if conditions of utilization are not met, the transaction is finished (1007). If conditions of utilization are met, a screen 800 shown in Fig. 8 for example is displayed on the display and input device 204 and the user is informed of the condition information 1102 (1003). Next, the CPU 307 instructs to display a screen 1800 shown in Fig. 18 on the display and input device 204, accepts the input of PIN from the user, sends it to the host computer 102, and authenticates the user by the collation of PIN (1004).

That is, the host computer 102 reads PIN stored in the auxiliary memory 503 with PIN related to the user's account number and the CPU 504 compares PIN registered beforehand and PIN received via the communication unit 501. If they are matched as a result of comparison, it is determined that the authentication of the user succeeds and if they are not matched, it is determined that the authentication of the user fails. The host computer sends the result of determination to the teller machine 101 without biometrics authentication via the communication unit 501. The CPU 307 of the teller machine 101 without biometrics authentication grasps the received result of determination and executes the following process.

The following process is different depending upon the result of authentication based upon PIN (1005). If the authentication fails, the transaction is finished (1007). In the meantime, if the authentication succeeds, the transaction is executed in a range fit for the condition of utilization related to the sum included in the information acquired in the step 1000 (1006). For example, as for a user having the account number 10003 shown in Fig. 11, if a withdrawn sum is 200,000 yen or less, the transaction is permitted.

The CPU 307 of the teller machine 101 without biometrics authentication reduces a residual frequency by once if the frequency of transactions is set in the condition information 1102. If the sum is set, a residual sum is acquired by reducing by a sum withdrawn in the step 1006. To update the condition information 1102 stored in the auxiliary memory 503 in the host computer 102, updated condition information is sent to the host computer 102 via the communication unit 303 (1008). The host computer 102 updates the condition information 1102 stored in the auxiliary memory 503 using the updated condition information received via the communication unit 501 and updates account balance of the corresponding user.

The process if the teller machine 101 without biometrics authentication is utilized is finished as described above. It need scarcely be said that the teller machine 101 receives the information of normal termination from the host computer 102, executes a series of processing including a specified transaction, for example, the payment of cash, the return of the cash card and the printing and ejection of a transaction statement and finishes the transaction.

In the above-mentioned example, when a transaction is made at the teller machine 100 or 101, biometrics authentication is made in an IC card in the teller machine 100 and the host computer 102 collates PIN. However, according to another example, PIN may also be collated not by the host computer 102 but in an IC card. The example will be described below. In this case, PIN of a user shall be stored in the EEPROM 405 of his/her IC card beforehand. When the CPU 307 of the teller machine 100 or 101 receives PIN input by the user on the display and input device 204, the CPU sends the PIN to the IC card via the IC card reader/writer 305. The IC card receives the PIN via the wireless communication unit 400, the CPU 401 read PIN encrypted and registered in the EEPROM 405, and after the coprocessor 402 decodes it, it compares both PINs. If both are matched as a result of comparison, it is determined that authentication succeeds and if not matched, it is determined that authentication fails. The result of authentication is sent to the teller machine 100 or 101 via the wireless communication unit 400. The following process is similar to that in the above-mentioned example.

### Second Embodiment

In a second embodiment, condition information shown in Fig. 11 is stored not in a host computer 102 but in an IC card. This embodiment is applied to only a teller machine 101 without biometrics authentication corresponding to an IC card, however, this embodiment has a merit that extra communication for sending/receiving condition information is not required between the host computer 102 and the teller machine 100 or 101.

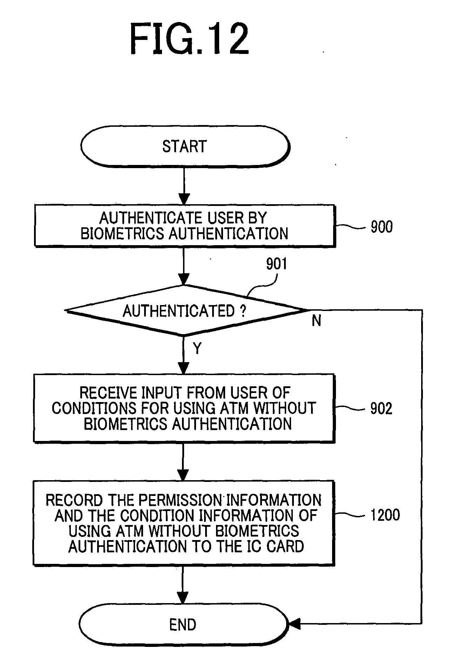

First, processing when a user takes a procedure for requesting to permit utilizing the teller machine 101 without biometrics authentication using a teller machine 100 with biometrics authentication will be described. Fig. 12 shows a flow of the processing at this time.

Fig. 12 corresponds to Fig. 9 in the first embodiment except that Fig. 12 is different from Fig. 9 in a step 1200. In the step 1200, the CPU 307 of the teller machine 101 sends utilization permission information 1101 and condition information 1102 to an IC card via an IC card reader/writer 305. In the IC card, the utilization permission information 1101 and the condition information 1102 respectively received via a communication unit 400 are stored in the EEPROM 405.

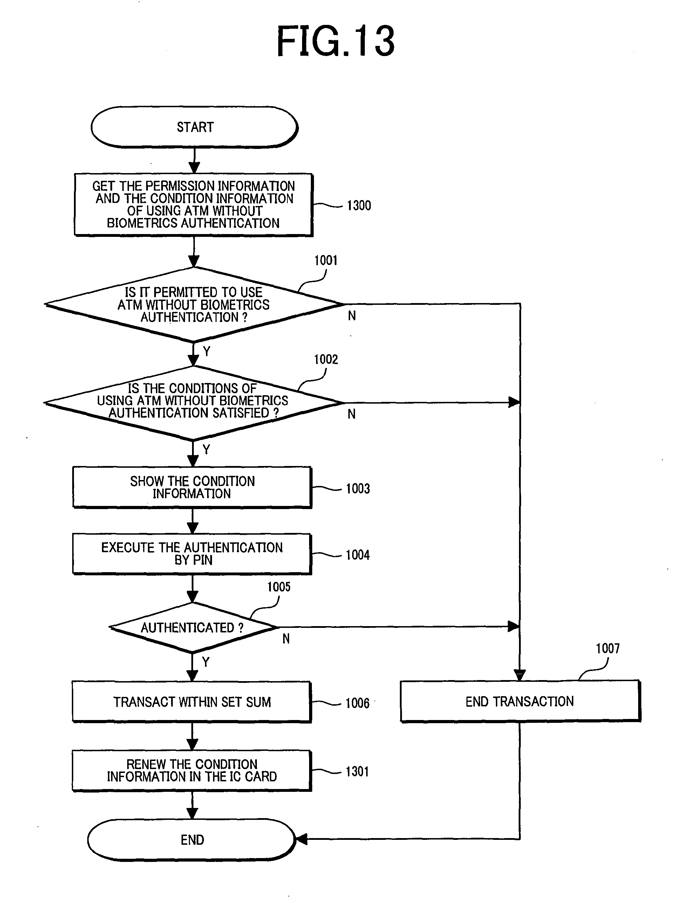

Referring to Fig. 13, a process will be described below in the case the teller machine 101 without biometrics authentication is utilized after the condition information is registered in the IC card as described above. Fig. 13 corresponds to Fig. 10 in the first embodiment except that steps 1300 and 1301 are different.

In the step 1300, the CPU 307 sends a signal for requesting information of the IC card via the IC card reader/writer 305. The CPU 401 of the IC card receives the requesting signal via the wireless communication unit 400, reads the utilization permission information 1101 and the condition information 1102 respectively stored in the EEPROM 405 and related to the teller machine without biometrics authentication, and sends the information to the teller machine 101 without biometrics authentication via the wireless communication unit 400. The CPU 307 of the teller machine 101 without biometrics authentication receives the utilization permission information 1101 and the condition information 1102 via the IC card reader/writer 305. The step 1300 is completed as described above.

In the step 1301, the CPU 307 of the teller machine 101 without biometrics authentication sends the IC card the updated condition information via the IC card reader/writer 305. The CPU 401 of the IC card receives the updated condition information via the communication unit 400 and updates the condition information 1102 stored in the EEPROM 405. The step 1301 is completed as described above. As for the contents of update, if a frequency of transactions is set in the condition information 1102, a residual frequency is reduced by once. Besides, if a sum is set, a residual sum is reduced by a sum withdrawn in the step 1006.

### Third Embodiment

In a third embodiment, the condition information shown in Fig. 11 is stored in both a host computer and an IC card. This embodiment is applied to only a teller machine 101 without biometrics authentication corresponding to an IC card, however, as the unfair rewriting of information and an error can be detected by matching information respectively stored in the host computer 102 and the IC card, security is enhanced.

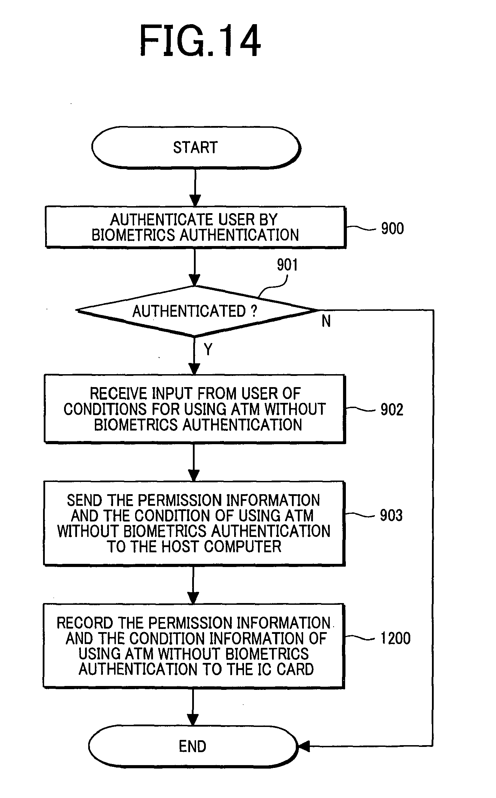

First, a process when a user takes a procedure for requesting to permit utilizing the teller machine 101 without biometrics authentication using a teller machine 100 with biometrics authentication will be described. Fig. 14 shows a flow of processing at this time. Fig. 14 corresponds to Fig. 9 in the first embodiment and Fig. 12 in the second embodiment and is different in that steps 903 and 1200 are both executed. That is, in the third embodiment, utilization permission information 1101 and condition information 1102 of the teller machine without biometrics authentication are stored in both the host computer and the IC card.

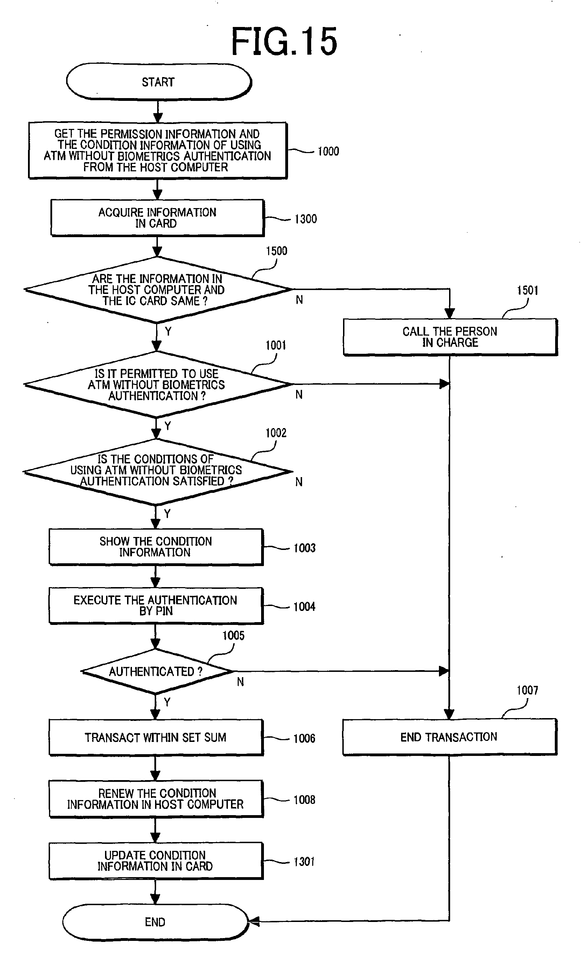

Referring to Fig. 15, operation when the teller machine 101 without biometrics authentication is utilized will be described. Fig. 15 corresponds to Fig. 10 in the first embodiment and Fig. 13 in the second embodiment. Fig. 15 is different from them in that steps 1000 and 1300 are both executed, steps 1500 and 1501 are added, and steps 1008 and 1301 are both executed.

First, in the steps 1000, 1300, the teller machine 101 without biometrics authentication receives the utilization permission information and the condition information for utilizing the teller machine without biometrics authentication from the host computer and the IC card. Next, the CPU 307 determines whether or not the utilization permission information and the condition information respectively acquired from the host computer and the utilization permission information and the condition information respectively acquired from the IC card are matched (1500). If they are not matched as a result of determination, CPU operates a display and input device 204 for example to inform an operator (the user)(1501) and finishes the transaction. If the information is matched, a step 1001 and the following steps are continued.

In the steps 1008, 1301, the condition information respectively registered in the host computer and the IC card for utilizing the teller machine without biometrics authentication is updated. A method of update is the same as that in the above-mentioned example.

### Fourth Embodiment

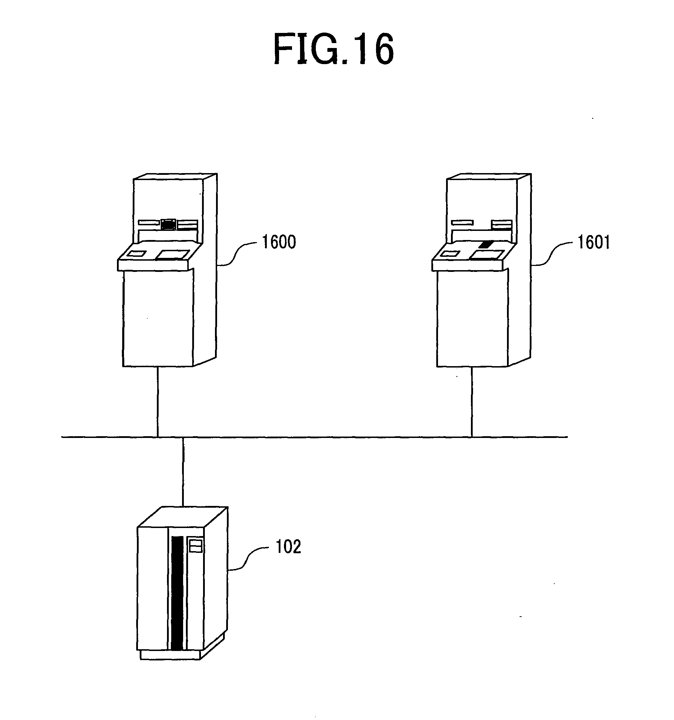

Fig. 16 shows a state in which a plurality of teller machines are connected in a fourth embodiment.

Reference numerals 1600 and 1601 both denote a teller machine provided with biometrics authentication means, however, they shall be provided with only a part of biometric sensors 210 to 217 in common. Hereinafter, for simplification, 1600 is called the first teller machine and 1601 is called the second teller machine.

For example, a person who usually utilizes the first teller machine 1600 may desire to utilize the second teller machine 1601 in haste on his/her journey and others. As the second teller machine 1601 is not provided with a part of the biometrics authentication means with which the first teller machine 1600 is provided, all biometrics authentication required for a transaction in an account utilized at the first teller machine 1600 cannot be executed at the second teller machine. Then, suppose that the second teller machine 1601 to be the teller machine without biometrics authentication in the first to third embodiments and suppose that the first teller machine 1600 to be the teller machine with biometrics authentication in the first to third embodiments. Thereby, the second teller machine 1601 can be utilized according to the same procedure as that in the first to third embodiments.

If the first teller machine 1600 and the second teller machine 1601 are provided with common biometrics authentication means, security can be enhanced, compared with security in the first to third embodiments. The enhancement of security is enabled by substituting the biometrics authentication means for authentication based upon PIN (1004) shown in Figs. 10, 13, 15.

Some embodiments have been described, however, the invention can be variously transformed. For example, in the above-mentioned embodiment, the process for biometrics authentication is executed by a CPU in an IC card, however, the invention is not limited to this. For example, the collation of biometric data may also be executed by the CPU 307 in the teller machine 100 with biometrics authentication. In this case, biometric data to be compared is registered in the EEPROM 405 of the IC card beforehand and the CPU 307 of the teller machine 100 executes the authentication process by comparing biometric data acquired from a biometric sensor 310 and biometric data received from the IC card. A process after the comparison is similar to that in the above-mentioned example. Biometric data used for the comparison is deleted from the teller machine 100 from the viewpoint of the protection of personal information after a series of transaction process of the user is finished.

For another transformed example, an example that biometric data are collated by the host computer 102 is also conceivable. In this case, biometric data to be compared is encrypted, is registered in the auxiliary memory 503 of the host computer 102 beforehand, and biometric data acquired from the biometric sensor 310 and the biometric data registered in the auxiliary memory 503 are compared and an authentication process is executed by the execution of the CPU 504.

According to the above-mentioned embodiments, conditions for utilizing the teller machine 101 are set by operation at the teller machine 100, however, the invention is not limited to this. For example, a dedicated machine, for example, a personal computer (PC) connected to a biometric sensor is installed in a branch and others of a financial institution except the teller machine 100, a user or a staff of the financial institution operates this machine, and the similar information to the above-mentioned conditions can be also set.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A cash transaction system for enabling a transaction in cash using a card at an automated teller machine (100, 101) connected to a host computer (102), **characterized in that**:
the host computer (102) is provided with a memory (503) that manages an account of a user and a processor (504) that updates the balance of the account;
the automated teller machine (100, 101) is provided with a card information handling unit (304) that communicates information with the card, a display and input device (204) which displays a guidance screen for the user and on which the user inputs data, a cash handling unit (300) for withdrawing or depositing cash and a processor (307) that executes control and processing related to a transaction;
a predetermined machine connected to the host computer (102) and provided with setting means for setting conditions for utilizing the automated teller machine (100, 101) for every user is further provided; and
information of conditions of utilization set by the setting means is stored in the memory (503) of the host computer (102) with the information related to the account of the user or is stored in a memory device (405) provided to the card brought by the user.

2. The cash transaction system according to Claim 1, **characterized in that**:
the automated teller machine (100, 101) further includes a first automated teller machine (100) provided with a sensor (210-217;301) that acquires biometric data of a user and a second automated teller machine (101) without a sensor;
the predetermined machine is the first automated teller machine (100); and
the setting means is realized by the display and input device (204) and the processor and sets information of conditions input by the user via the display and input device (204) for utilizing the second automated teller machine when the user is authenticated as a valid customer as a result of authentication based upon biometric data acquired from a first type of sensor.

3. The cash transaction system according to at least one of the preceding claims, **characterized in that**:
the automated teller machine (100, 101) includes a first automated teller machine (100) provided with a first type of sensor that acquires biometric data of a user and a second automated teller machine (101) provided with a second type of sensor that acquires biometric data of the user;
the predetermined machine is the first automated teller machine (100); and
the setting means is realized by the display and input device (204) and the processor and sets information of conditions input by the user via the display and input device (204) for utilizing the second automated teller machine when the user is authenticated as a valid customer as a result of authentication based upon biometric data acquired by the sensor.

4. The cash transaction system according to at least one of the preceding claims, **characterized in that**:
the card is an IC card provided with a memory device (403-405) and a CPU (401);
the card information handling unit is a card information input/output device (304) that communicates information with the IC card; and
the authentication based upon biometric data is executed by collating biometric data of a user registered in the memory device beforehand with biometric data acquired by the sensor by the CPU.

5. The cash transaction system according to at least one of the preceding claims, **characterized in that**:
the card is an IC card provided with a memory device (403-405) and a CPU (401);
the card information handling unit is a card information input/output device (304) that communicates information with the IC card; and
the authentication based upon biometric data is executed by collating biometric data of a user registered in the memory device (405) of the IC card or in the memory (503) of the host computer (102) beforehand with biometric data acquired by the sensor by the processor (504) of the host computer.

6. The cash transaction system according to at least one of the preceding claims, **characterized in that**:
the memory (403-405) or the memory device of the card stores at least one, specified by a user, of an available period, a transacted sum and a frequency of transactions respectively related to the utilization of the second automated teller machine, an area of the second automated teller machine and information for identifying a financial institution that manages the second automated teller machine as the condition information.

7. The cash transaction system according to at least one of the preceding claims, **characterized in that**:
when the second automated teller machine is utilized, the processor (307) of the second automated teller machine acquires the condition information from the memory device or the memory and determines whether a user can utilize the second automated teller machine or not.

8. The cash transaction system according to at least one of the preceding claims, **characterized in that**:
a first authentication process by the collation of biometric data of a user acquired by the first automated teller machine is executed in the IC card; and
a second authentication process by the collation of a personal identification number input by the user via the display and input device (204) is executed by the processor (504) of the host computer (102).

9. The cash transaction system according to at least one of the preceding claims, **characterized in that**:
if it is determined that the second automated teller machine can be utilized, the second automated teller machine sends a personal identification number input via the display and input device (204) to the host computer (102); and
the processor (504) of the host computer (102) authenticates a user by collating the received personal identification number with a personal identification number of the user registered in the memory beforehand.

10. An automated teller machine (100, 101) connected to a host computer (102) provided with a memory (503) that manages an account of a user for making a transaction in cash using a card, comprising:
a card information handling unit (304) that communicates information with the card;
a display and input device (204) which displays a guidance screen for the user and on which the user inputs data;
a cash handling unit (300) for withdrawing or depositing cash;
a processor (307) that executes control and processing related to the transaction; and
a communication unit (303) that communicates information related to the transaction with the host computer (102), **characterized in that**:
conditions for utilizing the automated teller machine are set for every user according to input by the user via the display and input device (204) by the processing of the processor (307); and
information of the set conditions is sent to the memory (503) of the host computer (102) via the communication unit (303) to store with the information related to the account of the user or is transferred to a memory device provided to the card via the card information handling unit (304) to store in the memory.

11. The automated teller machine according to Claim 10, further comprising:
a sensor (210-217; 301) that acquires biometric data of a user, **characterized in that**:
when the user is authenticated as a valid customer as a result of authentication based upon biometric data acquired from the sensor (210-217; 301), information of conditions for utilizing another automated teller machine is set according to input by the user via the display and input device (204).

12. The automated teller machine according to Claim 10 and/or 11, **characterized in that**:
the card is an IC card provided with a memory device (403-405) and a CPU (401);
the card information handling unit is a card information input/output device (304) that communicates information with the IC card; and
the authentication based upon biometric data is executed by collating biometric data of a user registered in the memory device (405) of the IC card beforehand with biometric data acquired by the sensor by the CPU.

13. The automated teller machine according to at least one of claims 10 to 12, **characterized in that**:
at least one of an available period, a transacted sum and a frequency of transactions respectively related to the utilization of the second automated teller machine, an area of the second automated teller machine and information for identifying a financial institution that manages the second automated teller machine is specified and input as condition information according to input by the user via the display and input device (204).

14. A cash transaction system including a plurality of automated teller machines (100, 101) connected to a host computer (102) for making a transaction in cash at the plurality of automated teller machines (100, 101) using a card proper to a user and brought by the user, **characterized in that**:
the host computer (102) is provided with a memory (503) that manages an account of the user;
a first automated teller machine permits the user the transaction when the user is authenticated as a valid customer by first authentication and second authentication for the user;
the second automated teller machine permits the user the transaction when the user is authenticated as a valid customer by the second authentication for the user; and
a process for the first authentication or the second authentication is executed by the host computer (102) or a processor (307) of the first or second automated teller machine or a CPU (401) provided to the card brought by the user.

15. The cash transaction system according to Claim 14, **characterized in that**:
the first authentication is authentication by collating biometric data of a user; and
the second authentication is authentication by collating biometric data of the user or authentication by collating a personal identification number input by the user via an input device (204).

16. The cash transaction system according to at least one of the claims 14 to 15, **characterized in that**:
the first automated teller machine is provided with setting means for setting conditions for a user to utilize the second automated teller machine; and
information of conditions set by the setting means is stored in the memory (503) of the host computer (102) with the information related to the account of the user or is stored in a memory device (405) provided to the card brought by the user.

17. A transaction method in a cash transaction system for making a transaction in cash using a card at an automated teller machine connected to a host computer (102), comprising:
a step of reading information of the card used by a user for the transaction;
a step of displaying a transaction guidance screen on a display and input device (204) to enable the input of the transaction on the screen by the user;
a step of withdrawing or depositing cash via a cash handling unit (300);
a step of storing and managing account information of the user in a memory (503) provided to the host computer (102) ;
a step of inputting conditions for utilizing the automated teller machine via the display and input device (204) and setting the conditions of utilization for every user; and
a step of storing information of the set conditions of utilization in the memory (503) of the host computer (102) with the information related to an account of the user or storing in a memory device (405) provided to the card brought by the user.

18. The transaction method according to Claim 17, comprising:
a step of acquiring biometric data of a user by a sensor (210-217; 301) provided to the automated teller machine; and
a step of authenticating the user using the biometric data acquired by the sensor (210-217; 301), **characterized in that**:
when the user is authenticated as a valid customer as a result of the authentication of the user, information of conditions input by the user via the display and input device (204) for utilizing the automated teller machine is set.

19. The transaction method according to at least one of claims 17 to 18, **characterized in that**:
the authentication of a user using the biometric data is executed by collating biometric data of the user registered in a memory device (405) of an IC card used for a transaction beforehand with biometric data acquired by the sensor by CPU of the IC card.

20. The transaction method according to at least one of claims 17 to 19, **characterized in that**:
at least one of a period in which the automated teller machine can be utilized, a transacted sum, a frequency of transactions, an area of the automated teller machine and information for identifying a financial institution that manages the automated teller machine is specified as conditions of utilization according to input from the display and input device (204).

21. The transaction method according to at least one of claims 17 to 20, comprising:
a step of acquiring the condition information from the memory device or the memory when the automated teller machine for which the condition is set is utilized and determining whether a user can utilize the automated teller machine or not.

22. The transaction method according to at least one of claims 17 to 21, further comprising:
a step of authenticating a user by collating a personal identification number input by the user via the display and input device (204) with a personal identification number of the user stored in the memory (503) of the host computer (102) beforehand.

23. A program processed on a computer for executing a transaction method in a cash transaction system for making a transaction in cash using a card at an automated teller machine (100, 101) connected to the host computer (102), comprising:
a step of reading information of the card used by a user for the transaction;
a step of displaying a transaction guidance screen on a display and input device (204) to enable the input of the transaction by the user;
a step of withdrawing or depositing cash via a cash handling unit (300);
a step of storing and managing account information of the user in a memory (503) provided to the host computer (102);
a step of inputting conditions for utilizing the automated teller machine via the display and input device (204) and setting the conditions of utilization for every user; and
a step of storing information of the set conditions of utilization in the memory (503) of the host computer (102) with the information related to an account of the user or storing the information in a memory device (405) provided to the card brought by the user.
